# EUROPÄISCHE PATENTANMELDUNG

(11) **EP 1 362 784 A1**
(43) Veröffentlichungstag der Anmeldung: **19.11.2003**
(21) Anmeldenummer: 03010543.1
(22) Anmeldetag: 10.05.2003
(51) Int. Cl.: B64C 1/20, B60P 7/08

(54) **Befestigungsschiene**

(30) Priorität: 16.05.2002 DE 10221664
(71) Anmelder: VS Guss AG, 42719 Solingen (DE)
(72) Erfinder: Lautz, Detlef, 42781 Haan (DE); Güttel, Olaf, 42657 Solingen (DE)
(74) Vertreter: Stachow, Ernst-Walther, Prof. Dr.

(57) **Zusammenfassung**

Die Erfindung betrifft eine Befestigungsschiene (1) zur Befestigung von Gurtankern mit einem Bodenteil (3) und einem Wandteil (2), wobei das Wandteil (2) zur Aufnahme des Gurtankers in seinem oberen Bereich durch eine Ausnehmung (8) mit mindestens einer Erweiterung (9) zu einem Halteprofil (7) ausgebildet ist. Das Bodenteil (3) weist einen Steg (4) in Längsrichtung des Halteprofils (7), Öffnungen (6) an beiden Seiten des Steges (4) und einen umlaufenden Rand (5) auf. Die Ausnehmung (8) im oberen Bereich des Wandteiles (2) ist breiter als der Steg (4) ausgebildet, so dass die Befestigungsschiene als einstückiges Gussstück mit einem Formwerkzeug herstellbar ist.

## Beschreibung

Die Erfindung betrifft eine Befestigungsschiene zur Befestigung von Gurtankern mit einem Bodenteil und einem Wandteil, wobei das Wandteil zur Aufnahme des Gurtankers in seinem oberen Bereich durch eine Ausnehmung mit mindestens einer Erweiterung zu einem Halteprofil ausgebildet ist.

Befestigungsschienen zur Befestigung von Gurtankern werden hauptsächlich im Transportwesen eingesetzt, wo Güter durch Spanngurte oder -Netze mit Befestigungsankern zur Ankopplung an an einem Untergrund fixierten Befestigungsschienen mit entsprechenden Halteprofilen festgezurrt werden.

Ein derartiger Gurtanker mit einer entsprechenden Aufnahme ist in dem US-Patent 787,750 und in abgewandelter Form in dem Gebrauchsmuster G 93 93 666.3 beschrieben. Hierbei weist der Gurtanker ein Fußteil mit pilzähnlichen Füßen, die beabstandet mit dem Kopf nach unten hin weisend angebracht sind, und einen federnd gelagerten Zylinder auf. Die entsprechende Befestigungsschiene, wie sie auch im Prinzip in der Norm ISO 7166 beschrieben ist, ist mit einem C-förmigen Querschnitt ausgestattet, wobei die Öffnung des C-förmigen Querschnittes durch eine senkrecht zum Querschnitt und an der Oberseite der Schiene verlaufende Ausnehmung gebildet wird.

Üblicherweise werden zur Herstellung derartiger Befestigungsschienen eine Reihe von Arbeitsgängen benötigt, indem von einer stranggepressten Endlosprofilschiene aus Aluminium mit entsprechendem C-Profil ausgegangen wird, welche auf eine handhabbare Größe und in der Regel bei Kurzschienen ein zweites Mal auf ein Verwendungsmaß abgelängt werden. In weiteren Arbeitsgängen und mit anderen Werkzeugen als zuvor werden in die Befestigungsschienen Befestigungslöcher zur Befestigung der Schiene auf einen Untergrund und die Erweiterungen in den Ausnehmungen eingebracht.

Wie in dem US-Patent 5,823,724 ausgeführt, werden die offenen Enden der Befestigungsschienen üblicherweise zusätzlich mit Endkappen versehen und/oder durch Verlegen der Befestigungsschiene in eine gleichgroße Nut im Untergrund abgedeckt, wodurch Herstellungs- und Montageaufwand weiter erhöht werden.

Probleme beim Gebrauch treten u.a. durch die Schwierigkeit auf, Verschmutzungen durch Wasser, Schnee, Eis oder andere Fremdpartikel aus der nur durch die Ausnehmung nach oben hin geöffneten Befestigungsschiene zu entfernen. Im US-Patent 3,452,958 wird dieses Problem nur speziell für Befestigungsschienen an Palettenrändern gelöst.

Der Erfindung liegt die Aufgabe zugrunde, eine Befestigungsschiene bereitzustellen, die mit geringerem Aufwand herstellbar ist.

Die Aufgabe wird erfindungsgemäß dadurch gelöst, dass bei einer Befestigungsschiene der eingangs genannten Art das Bodenteil einen Steg in Längsrichtung des Halteprofils, Öffnungen an beiden Seiten des Steges und einen umlaufenden Rand aufweist, wobei der umlaufende Rand im wesentlichen durch den unteren Rand des Wandteiles gebildet wird, und dass die Ausnehmung im oberen Bereich des Wandteiles breiter als der Steg ist.

Der Steg verläuft im wesentlichen parallel zur Ausnehmung und ist so zur Ausnehmung beabstandet, dass er als Tiefenbegrenzung für einen eingeführten Gurtanker dienen kann. Dadurch kann das Fußteil des Gurtankers von unten gegen das Halteprofil positioniert werden. Der Steg ist dazu geeignet, aus vielen Richtungen auf den Gurtanker wirkende Kräfte aufzunehmen und an das Halteprofil weiterzugeben. Der Steg wie auch der umlaufende Rand verleihen der Befestigungsschiene hierbei die notwendige Stabilität und Festigkeit gegenüber Biegen und Verwinden.

Bevorzugt verläuft der Steg in der Mitte des Bodenteiles.

Der Steg kann mindestens eine Unterbrechung aufweisen, die den Steg in mindestens zwei Teile teilt, wobei der Steg in Form von zwei Vorsprüngen vom umlaufenden Rand her in das Innere des Bodenteiles bzw. zur Mitte des Bodenteiles hineinragt und die Öffnungen im Bodenteil miteinander verbunden sind.

Bevorzugt ist der Aufbau der Befestigungsschiene spiegelsymmetrisch, wobei die Symmetrieebene senkrecht zum Steg und zur Ausnehmung im Wandoberteil verläuft.

In einer anderen Ausbildung kann das Halteprofil auch aus der Mitte heraus in einer seitlichen Position angeordnet sein.

Um den Druck des Steges gegen den eingeführten pilzförmigen Fuß des Gurtankers zu verstärken, kann der Steg wie eine Blattfeder ausgebildet sein.

Der Steg kann so tief im Fußteil angeordnet sein, dass er mit seinen Stegenden in den umlaufenden Rand integriert ist bzw. mit seinen Stegenden jeweils einen Abschnitt des umlaufenden Randes bildet.

Durch die Öffnungen im Bodenteil ist ein leichtes Reinigen einer durch Eis, Schnee oder andere Partikel zugesetzten Befestigungsschiene möglich. Die Reinigung kann auch durch das Lösen vom Untergrund, auf den die Befestigungsschiene montiert ist, unterstützt werden.

Dadurch, dass der umlaufende Rand im wesentlichen durch den unteren Rand des Wandteiles gebildet wird, kann die Ausnehmung ohne seitliche Begrenzung am Ende der Befestigungsleiste auslaufen, so dass ein leichteres Reinigen der Befestigungsschiene möglich ist.

Durch die Öffnungen im Bodenteil wird der Herstellungsprozess entschieden vereinfacht, indem eine derart ausgebildete Befestigungsschiene in ihrer fertigen Form mit Hilfe von Formwerkzeugen und ohne Verwendung eines weiteren Werkzeuges als Gussstück hergestellt werden kann, insbesondere durch Maschinenformwerkzeuge im Sand-, Kokillen- oder Druckgussverfahren oder durch Handformwerkzeuge. Dadurch, dass die Ausnehmungen mit den Erweiterungen breiter als der Steg sind, ist zudem eine einfache Formtrennung möglich, so dass das Gussstück in einem Arbeitsgang hergestellt werden kann.

In einer Weiterbildung weist das Halteprofil mindestens zwei miteinander verbundene Erweiterungen mit einem Übergang auf, wobei der Übergang zu einem Klauenpaar ausgebildet ist. Vorteilhaft an dieser Ausführung ist, dass der Gurtanker mit seinen Füßen von zwei Richtungen her in die Befestigungsschiene einsetzbar und unter das Klauenpaar schiebbar ist.

Die Enden des Halteprofils im oberen Wandteil können in drei Ausführungen ausgebildet sein, indem es im oberen Teil des Wandteiles an seinen Enden eine Begrenzung aufweist oder indem es an den Enden der Befestigungsschiene ohne Begrenzungen ausläuft oder indem es nur an einem Ende über eine Begrenzung verfügt. Die Begrenzung kann durch eine Barriere quer zur Längsachse des Halteprofils gebildet werden, wodurch das Halteprofil teilweise zu seinen Enden seitlich geöffnet ist, oder als Begrenzung als bis zur vollen Seitenhöhe oder drüber hinausweisend ausgeführt sein, wobei sie im letzen Fall zugleich als Markierung für die korrekte Position des Gurtankers dienen kann. Ferner ist es denkbar, dass sich das Halteprofil nur über einen Teil der vollen Länge der Befestigungsschiene erstreckt. Durch diese Ausführungsformen werden zum einen die möglichen Einsetz- und Unterschiebrichtungen des Gurtankers vorbestimmt. Sind an beiden Enden Begrenzungen vorhanden, so ist der Gurtanker nur von oben, aber in zwei um 180 gedrehte Positionen einsetzbar. Weist das Halteprofil nur eine Begrenzung auf, so kann der Gurtanker seitlich von einer Richtung her in die Befestigungsschiene eingesetzt und unter die Klauen geschoben werden. Dadurch kann konstruktiv erreicht werden, dass der Gurtanker nur von dieser Seite her in die Befestigungsschiene eingebracht werden kann, was im Anwendungsfall aus Gründen der Sicherheit und der optimalen Kraftaufnahme wesentlich sein kann. Wenn die Ausnehmung am Ende der Befestigungsschiene so ausgebildet ist, dass sie mit einer Erweiterung ausläuft, so wird zum Positionieren eines Gurtankers mit einem Fuß minimal eine Ausnehmung mit einer Erweiterung benötigt. Weist das Halteprofil an beiden Enden keine Begrenzung auf, so ist der Gurtanker von beiden Seiten her einsetzbar. Zum anderen werden durch diese Ausführungsformen Stabilität und Festigkeit der Befestigungsschiene beeinflusst. Dies trifft insbesondere dann zu, wenn sich das Halteprofil nicht über die ganze Länge der Befestigungsschiene erstreckt, sondern sich mittig, an einem Ende oder in einem Abschnitt dazwischen befindet.

In einer Ausführung kann die Befestigungsschiene mehrere beabstandete Abschnitte mit Halteprofilen aufweisen. Diese Halteprofile können gleich oder verschieden ausgebildet sein. Denkbar ist, dass sich die Halteprofile in Reihe in Längsachse der Befestigungsschiene erstrecken. Ferner können die Halteprofile in den Längsseiten des Wandteiles eingearbeitet sein, wobei sie in Reihe in einer Längsseite und/oder parallel zueinander in beiden Längsseiten des Wandteiles verlaufen können. Im Rahmen der Erfindung ist auch eine Anordnung von Halteprofilen in den Seitenteilen und an der Oberseite des Wandteiles zu sehen.

In einer besonderen Ausbildung weist die Wand in Richtung des Steges seitliche Passagen zur Durchführung eines Gurtes auf. Dadurch ist die Befestigungsschiene nicht nur als Endpunkt für einen Gurtanker, sondern auch als Halte- und/oder Umlenkpunkt für einen Gurt einsetzbar. Die erforderliche Größe der Passagen hängt von den verwendeten Gurtbreiten bzw. Gurtquerschnitten ab. Die Passagen können für die Durchführung von Seilen oder anderen Befestigungsmitteln mit kreisförmigem Querschnitt auch kreisförmig ausgeführt sein.

In einer bevorzugten Weiterbildung ist zur Durchführung des Gurtes die Stegunterseite um mehr als eine Gurtdicke höher als der untere Rand des Wandteiles angeordnet. Hierbei ist der Gurt durch die seitlichen Passagen im Wandteil und unter die Unterseite des Steges so führbar, dass die Befestigungsschiene gleichzeitig als Halte- und Umlenkpunkt für einen Gurt und als Befestigungspunkt für einen Gurtanker dienen kann.

Eine weiterführende Ausbildung der Erfindung weist in dem Wandteil und/oder im Steg Befestigungsöffnungen zur Befestigung der Befestigungsschiene an einer Unterlage mit Schrauben, Bolzen oder Nieten auf. Denkbar zur Befestigung sind auch andere Möglichkeiten, wie beispielsweise eine konische Erweiterung des umlaufenden Randes, der zur Halterung seitlich auf eine entsprechend profilierte Schiene aufgeschoben und auf ihr in die Arbeitsposition geschoben werden kann.

Durch die besondere Ausbildung des Fußteiles mit dem Steg, den seitlichen Öffnungen und dem Halteprofil im oberen Bereich des Wandteiles ist es möglich, das die Befestigungsleiste einstückig ausgebildet wird.

Die Befestigungsschiene ist in einer besonderen Weiterbildung im Wandoberteil mit mindestens zwei sich kreuzenden Ausnehmungen zur Aufnahme von Gurtankern ausgestattet. Bevorzugt hierbei ist die Ausführung von zwei senkrecht zueinander verlaufenden Ausnehmungen. Dadurch ist es, wenn die Ausnehmungen ohne Begrenzungen am Ende auslaufen, beispielsweise möglich, den Gurtanker seitlich von vier Richtungen her auf die Befestigungsschiene zu befestigen.

Denkbar, aber hier nicht dargestellt, ist anstatt der o.a. Anordnung zweier sich kreuzender Ausnehmungen in Form eines Kreuzes auch eine Anordnung von mindestens drei in der Mitte der Befestigungsschiene zusammentreffenden Ausnehmungen in Form eines Dreisternes, dessen Strahlen bevorzugt in einem Drehwinkel von 120° auseinanderlaufen.

In einer besonderen Ausgestaltung der Erfindung kann die Befestigungsschiene an einer oder mehreren Seiten Ankopplungselemente aufweisen, mittels derer die Befestigungsschiene an eine andere Befestigungsschiene ankoppelbar ist. Hierdurch ist vorteilhaft zum einen, dass eine Befestigungsschiene in Einsetzrichtung des Gurtankers beliebig verlängerbar ist. Somit können je nach Anforderung auf einer verlängerten Befestigungsschiene mehrere Gurtanker und/oder ein entsprechend vergrößerter Gurtanker befestigt werden. Zum anderen können die Befestigungsschienen seitlich zueinander in einem Ankopplungswinkel zur Einsetzrichtung des Gurtankers angekoppelt werden, wobei der Ankopplungswinkel, abhängig von den Geometrien der Befestigungsschiene, beispielsweise bei einem rechteckigen Grundriss 90° oder bei einem sechseckigen Grundriss 60° betragen kann. Hierdurch sind die Befestigungsschienen vorteilhaft in einem definierten Abstand zueinander anordbar. In Kombination beider Ankopplungsarten, der seitlichen sowie der in Einsetzrichtung des Gurtankers, sind somit, abhängig von den Geometrien der verwendeten Befestigungsschienen, beliebige Anordnungen der Befestigungsschienen beispielsweise in Kreuz- oder Sternform oder als Wabenstruktur erzielbar. Die Ankopplung selbst kann beispielsweise dadurch erfolgen, indem das Bodenteil einer Befestigungsschiene einen horizontal verlaufenden, über die Wandung der Befestigungsschiene hinausgehenden, hakenförmigen Vorsprung mit einer Hinterschneidung aufweist, der in eine korrespondierende Öffnung einer anderen, anzukoppelnden Befestigungsschiene eingreift und mit der Hinterschneidung das Wandteil der anzukoppelnden Befestigungsschiene umgreift, so dass eine lose Verbindung zwischen den Befestigungsschienen entsteht. Mit der Fixierung beider Befestigungsschienen auf einem Träger ist eine form- und kraftschlüssige Ankopplung erzielbar.

In einer weiteren bevorzugten Ausbildung weist die Befestigungsschiene zwei Halteprofile auf. Diese können beispielsweise in zwei Seitenflächen angeordnet sein. Hierdurch können vorteilhaft zwei Gurtanker an der Befestigungsschiene befestigt werden.

In einer anderen Ausbildung sind in einer Befestigungsschiene drei Halteprofile angeordnet, wobei in der Oberseite und in den beiden Seitenflächen jeweils ein Halteprofil verläuft. Hierdurch können vorteilhaft bis zu drei Gurtanker an der Befestigungsschiene befestigt werden.

Denkbar im Rahmen der Erfindung ist auch die Anordnung von mehr als drei Halteprofilen in der Befestigungsschiene.

In einer bevorzugten Ausbildung weist die Befestigungsschiene ein oberseitiges und ein unterseitiges Halteprofil auf, wobei die Befestigungsschiene von der Form her aus zwei mit ihren Bodenteilen gegeneinander und zu einem Bodenteil verschmolzenen Befestigungsschienen besteht. Hierbei erstrecken sich die beiden Wandteile ober- und unterhalb des Bodenteiles so, dass die in den Wandteilen angeordneten Halteprofile nach oben bzw. nach unten weisen. Bevorzugt stehen die Halteprofile in Richtung ihrer Längsachsen senkrecht zueinander. Hierdurch sind vorteilhaft zwei Gurtanker miteinander verbindbar.

In einer besonders bevorzugten Ausbildung ist der Steg im Bodenteil unterbrochen und als ein sich nach unten wölbendes Klauenpaar ausgebildet. In einer weiter bevorzugten Ausgestaltung der Erfindung sind beide Klauenpaare, das im Wandteil und das im Bodenteil, spiegelsymmetrisch mit der Ebene des umlaufenden Randes als Spiegelebene ausgeformt Hierbei sind die Gurtanker so einsetzbar, dass sie mit den Köpfen ihrer pilzartigen Füße aneinander stoßen und sich somit gegenseitig gegen die Unterseite ihres ihnen zugehörigen Halteprofils drücken. Hieraus ergibt sich vorteilhaft, dass zwei Gurtanker miteinander verbindbar, die Befestigungsschiene durch den unterbrochenen Steg noch leichter reinigbar und die Entformung der Befestigungsschiene bei ihrer Herstellung vereinfacht ist. Außerordentlich wird hierbei eine Ausbildung bevorzugt, in der die Klauenpaare in ihren Längsachsen senkrecht zueinander stehen.

Bevorzugt sind die Halteprofile für die Befestigung von einpilzigen Gurtankern ausgebildet. Es ist jedoch auch die Ausbildung der Halteprofile für mehrpilzige Gurtanker denkbar, die im Falle einer Befestigungsschiene mit in ihren Längsachsen senkrecht zueinander stehenden Halteprofilen bevorzugt eine ungerade Anzahl von pilzähnlichen Füßen aufweisen. Ferner ist im Rahmen der Erfindung denkbar, dass die beiden zu verbindenden Gurtanker auch eine ungleiche Anzahl von pilzartigen Füßen aufweisen können.

Als mögliche Werkstoffe für die Befestigungsschiene kommen Eisen-, Stahl-, Aluminium- und/oder hochfeste Kunststoff-Werkstoffe in Betracht. Hierbei wird als Kunststoff faserverstärkter Kunststoff besonders bevorzugt.

Sechs Ausführungsbeispiele der Erfindung werden anhand der Zeichnung näher beschrieben. In der Zeichnung zeigen:
- Fig. 1: eine Befestigungsschiene mit einem Halteprofil mit zwei Erweiterungen in perspektivischer Darstellung,
- Fig. 2: die Befestigungsschiene mit dem Halteprofil mit zwei Erweiterungen in einer Aufsicht,
- Fig. 3: die Befestigungsschiene mit dem Halteprofil mit zwei Erweiterungen in einer Untersicht,
- Fig. 4: die Längsseite der Befestigungsschiene mit dem Halteprofil mit zwei Erweiterungen in einer Seitenansicht,
- Fig. 5: ein Ende der Befestigungsschiene mit dem Halteprofil mit zwei Erweiterungen in Pfeilrichtung a,
- Fig. 6: eine Befestigungsschiene mit einem Halteprofil mit drei Erweiterungen in perspektivischer Darstellung,
- Fig. 7: die Befestigungsschiene mit dem Halteprofil mit drei Erweiterungen in einer Aufsicht,
- Fig. 8: die Befestigungsschiene mit dem Halteprofil mit drei Erweiterungen in einer Untersicht,
- Fig. 9: eine Befestigungsschiene mit einem Halteprofil mit zwei an den Enden auslaufenden Erweiterungen in einer perspektivischen Aufsicht,
- Fig. 10: die Befestigungsschiene mit dem Halteprofil mit zwei an den Enden auslaufenden Erweiterungen in einer perspektivischen Untersicht,
- Fig. 11: die Befestigungsschiene mit dem Halteprofil mit zwei an den Enden auslaufenden Erweiterungen in einer Aufsicht,
- Fig. 12: die Befestigungsschiene mit dem Halteprofil mit zwei an den Enden auslaufenden Erweiterungen in einer Seitenansicht,
- Fig. 13: eine Befestigungsschiene mit zwei senkrecht zueinander stehenden Halteprofilen mit jeweils zwei an den Enden auslaufenden Erweiterungen in einer Aufsicht,
- Fig. 14: eine Befestigungsschiene mit einem Halteprofil mit drei Erweiterungen und stirnseitigen Ankopplungselementen in einer perspektivischen Aufsicht,
- Fig. 15: die Befestigungsschiene mit dem Halteprofil mit drei Erweiterungen und stirnseitigen Ankopplungselementen in einer Unteransicht,
- Fig. 16: die Längsseite der Befestigungsschiene mit dem Halteprofil mit drei Erweiterungen und stirnseitigen Ankopplungselementen in einer Seitenansicht,
- Fig. 17: die Befestigungsschiene mit dem Halteprofil mit drei Erweiterungen und stirnseitigen Ankopplungselementen in einer Aufsicht,
- Fig. 18: das Ende der Befestigungsschiene mit dem Halteprofil mit drei Erweiterungen und stirnseitigen Ankopplungselementen in einer Seitenansicht in Pfeilrichtung b,
- Fig. 19: eine Befestigungsschiene mit einem ober- und einem unterseitigen Halteprofil in perspektivischer Aufsicht,
- Fig. 20: die Befestigungsschiene mit dem ober- und dem unterseitigen Halteprofil in einer Seitenansicht in Pfeilrichtung c,
- Fig. 21: die Befestigungsschiene mit dem ober- und dem unterseitigen Halteprofil in einer Seitenansicht in Pfeilrichtung d und
- Fig. 22: die Befestigungsschiene mit dem ober- und dem unterseitigen Halteprofil in einer Aufsicht.

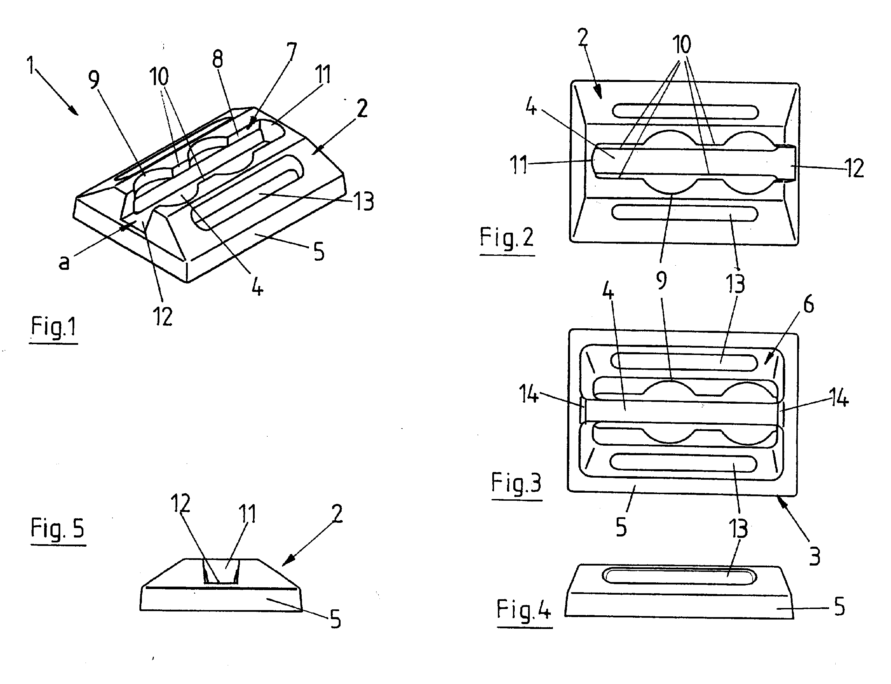

In den Figuren 1 bis 5 ist als ein erstes Ausführungsbeispiel der Erfindung eine Befestigungsschiene 1 dargestellt. Diese ist mit einem Wandteil 2 und einem rechtwinkligen Bodenteil 3, das einen Steg 4 und einen umlaufenden Rand 5 aufweist, ausgestattet, wobei der Steg 4 mittig über das Bodenteil angeordnet ist und an seinen Stegseiten zwei Öffnungen 6 aufweist, die an ihren übrigen Seiten von dem umlaufenden Rand 5 umschlossen werden. Die Befestigungsschiene ist spiegelsymmetrisch aufgebaut, wobei die Symmetrieebene senkrecht zum Steg 4 in Längsrichtung der Befestigungsschiene 1 verläuft. In der Mitte des oberen Teiles des Wandteiles 2 und in Längsrichtung der Befestigungsschiene ist ein Halteprofil 7 eingearbeitet, das sich durch eine in Längsrichtung der Befestigungsschiene 1 verlaufenden Ausnehmung 8 und zwei Erweiterungen 9 auszeichnet. Durch die Erweiterungen 9 ist das Teilstück der Ausnehmung 8, das die beiden Erweiterungen 9 miteinander verbindet, zu einem Klauenpaar 10 ausgebildet. Der mittig über das Bodenteil 3 verlaufende geradlinig verlaufende Steg 4 ist im wesentlichen parallel zur oberen Ausnehmung 8 angeordnet und etwas schmaler als die Ausnehmung 8 ausgebildet, wie deutlich in den Figuren 2 und 3 ablesbar ist. Der Betrag, um den der Steg 4 schmaler als die Ausnehmung 8 ist, ist hier u.a. dadurch bestimmt, dass Befestigungsschiene 1 als Gussstück in einem Maschinengussverfahren, beispielsweise nach dem Prinzip des Sand-, Kokillen- oder Druckgusses, oder durch ein Handformverfahren ein einfaches Trennen der Formwerkzeuge herstellbar ist. Die Befestigungsschiene ist somit einstückig herstellbar. Hierdurch ist der Herstellungsprozess im Vergleich zu den üblichen Herstellungsverfahren, in denen von einer stranggepressten Endlosprofilleiste ausgegangen wird, die in einer weiter oben beschriebenen Reihe von Arbeitsschritten mit verschiedenen Werkzeugen weiterverarbeitet wird, signifikant vereinfacht.

Das Halteprofil 7 verfügt an einem Ende über eine Begrenzung 11 und läuft am anderen Ende 12 ohne Begrenzung und ohne Erweiterung aus, so dass sich hier ein offenes Ende 12 der Ausnehmung 8 bildet. In diese Befestigungsschiene 1 ist ein hier nicht dargestellter einpilziger oder ein zweipilziger Gurtanker der eingangs beschriebenen Art aufnehmbar, der ein Fußteil mit pilzartigen Füßen, die beabstandet mit dem Kopf nach unten weisend angebracht sind, und einen federnd gelagerten Zylinder aufweist. Anstatt eines Befestigungsankers mit pilzartigen Füßen sind selbstverständlich auch andere Ausführungen denkbar, wobei das Halteprofil der Befestigungsschiene 1 diesen Ausführungen entsprechend angepasst ausgebildet wird. Der Gurtanker ist zur Aufnahme in die Befestigungsschiene 1 mit seinen pilzartigen Füßen von oben in die Erweiterungen 9 einführbar und mit den bzw. dem Kopf unter die Klauenpaare 10 schiebbar, wobei ein federnd gelagerter Zylinder in die Erweiterung einrastbar ist, durch die der dem Zylinder nächst gelegene Fuß des Gurtankers in die Befestigungsschiene 1 eingeführt ist. Ein Gurtanker dieser Art kann in diese Ausführungsform der Befestigungsschiene 1 nicht seitlich eingesetzt werden, da das offene Ende 11 des Halteprofils 7 keine Erweiterung 9 aufweist. Dadurch ist der Gurtanker nur von oben her einsetzbar. Ferner ist die Ausnehmung 7 zum geschlossenen Ende hin nach der Erweiterung 9 soweit fortgeführt, dass neben dem Klauenpaar 10 zwischen den Erweiterungen 9 ein zweites Klauenpaar 10 ausgebildet ist. Das offene Ende 12 des Halteprofils 7 hingegen ist nicht zu einem Klauenpaar ausgebildet. Dadurch ist der Gurtanker mit den pilzartigen Füßen nur in einer Richtung unter die beiden Klauenpaare schiebbar. Somit ist der Gurtanker nur in der Weise auf der Befestigungsschiene 1 befestigbar, indem er von oben einführbar und zum geschlossenen Ende der Ausnehmung hin unter die Klauenpaare 10 schiebbar ist.

Das offene Ende 12 ermöglicht zudem eine leichte Entfernung von Fremdpartikeln und Verschmutzungen aus der Befestigungsschiene 1. Wird die Befestigungsschiene 1 von ihrer Unterlage gelöst, so ist die Schiene dadurch, dass sie im Bodenteil 3 Öffnungen 6 aufweist, leicht durch Ausklopfen o.ä. von Fremdpartikeln reinigbar.

Ferner weist das Wandteil 2 zwei in Längsrichtung der Befestigungsschiene 1 verlaufende Passagen 13 in Form von Langlöchern für die Durchführung eines hier nicht dargestellten breiten Gurtes auf. Es sind aber auch ein schmalerer oder mehrere, entsprechend schmaler ausgebildete Gurte einführbar. Der Steg im Bodenteil weist eine Anhebung 14 auf und ist dadurch etwa um eine Gurtdicke höher als der umlaufende Rand 8 angeordnet, so dass der Gurt so mit der Befestigungsschiene 1 verbindbar ist, dass er durch eine Passage 13 einführbar, unter die Unterseite des Steges 4 durchführbar und durch die andere Passage 13 ausführbar ist. Das durchgeführte Gurtende kann weiter zu anderen Punkten geführt werden, so dass die Befestigungsschiene als Umlenkpunkt für den Gurt dient, oder mit einer Befestigungsklammer oder anderen Befestigungsmitteln so fixiert wird, dass das Gurtende nicht mehr durch die Austrittspassage 13 zurückführbar ist, so dass die Befestigungsschiene 1 auch als Befestigungsmittel für einen Gurt dienen kann. Somit ist die Befestigungsschiene als Befestigungsmittel für einen Gurtanker und zusätzlich als Verbindungs- oder Befestigungsmittel für mindestens einen Gurt benutzbar.

Befestigungsöffnungen zur Befestigung der Befestigungsschiene auf einer Unterlage sind in den Zeichnungen der Übersicht halber fortgelassen. Sollen jedoch keine Befestigungsöffnungen in die Befestigungsschiene eingebracht werden, so ist die Befestigungsschiene auch beispielsweise durch hier nicht dargestellte seitlich angreifende Spannklauen oder -Backen fixierbar oder in eine Schiene mit schwalbenschwanzartigem Profil schiebbar.

Denkbar, aber hier nicht dargestellt, ist auch eine Ausführungsform, die ein Halteprofil mit zwei offenen Enden aufweist, welche mit einer Erweiterung und/oder mit einer unerweiterten Ausnehmung ausgestattet sind. Weist das offene Ende eine Erweiterung auf, so ist der Gurtanker zusätzlich in Längsrichtung der Ausnehmung in die Befestigungsschiene einsetzbar.

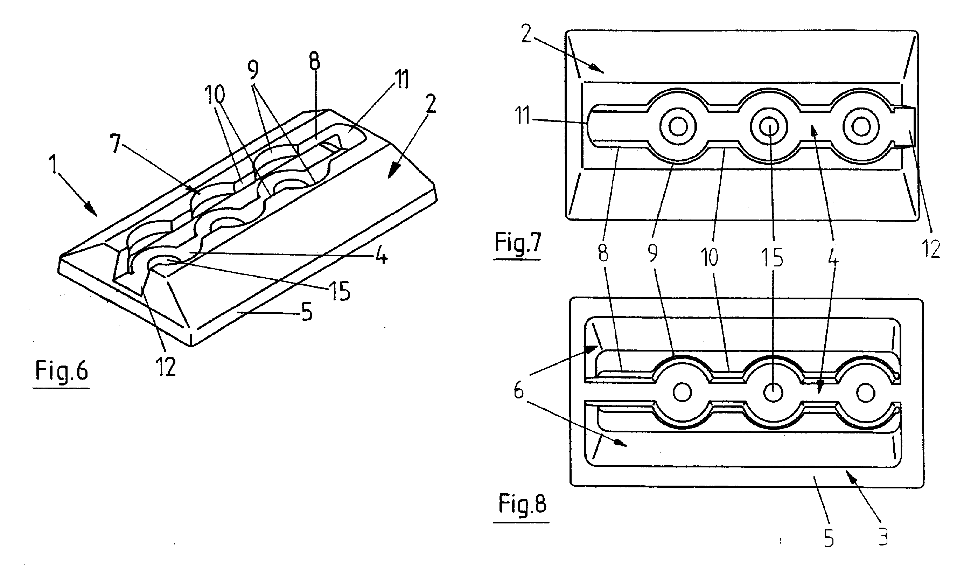

Ein weiteres Ausführungsbeispiel der Erfindung ist in den Figuren 6 bis 8 dargestellt, welches ebenfalls in einem spiegelsymmetrischen Aufbau mit einem Bodenteil 3 und einem Wandteil 2 ausgestattet ist, wobei das Bodenteil einen mittig verlaufenden Steg 4, einen umlaufenden Rand 5 und zwei von diesen umschlossene Öffnungen 6 aufweist. In dem oberen Teil des Wandteiles 2 ist ein Halteprofil 7 vorgesehen, dass mittig in Längsrichtung der Befestigungsschiene 1 und parallel zum Steg verläuft und eine Ausnehmung 8 mit drei Erweiterungen 9 aufweist, wobei die Ausnehmung 8 wie im vorangegangenen Ausführungsbeispiel zwischen den Erweiterungen und zum begrenzten Ende des Halteprofils 7 hin zu jeweils einem Klauenpaar ausgebildet ist und an dem offenen Ende 12 ohne Erweiterung und ohne Klauenpaarbildung ausläuft.

Die Ausbildung des Halteprofils 7 erlaubt eine Aufnahme eines hier nicht dargestellten ein-, zwei- oder dreipilzigen Gurtankers, der ähnlich wie im vorangegangenen Ausführungsbeispiel der Erfindung nur in einer bestimmten Weise mit der Befestigungsschiene 1 verbindbar ist, indem er von oben aufgesetzt und zum geschlossenen Ende des Halteprofils hin mit seinen pilzartigen Füßen unter die Klauenpaare 10 geschoben wird. Der Steg 4 dient hierbei ebenfalls als Tiefenbegrenzung für die Füße des Gurtankers und nimmt zusammen mit dem Halteprofil 7 die über den Gurtanker übertragenen Zugkräfte und Momente auf.

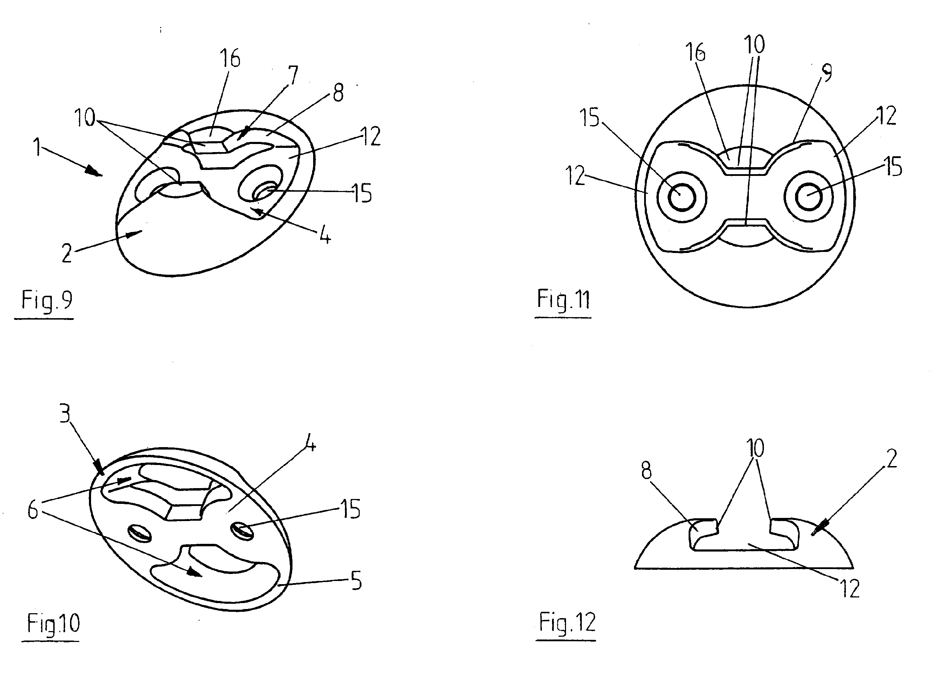

Wie in den Figuren 7 und 8 sichtbar, ist für den Steg 4 die gleiche Kontur wie für das Halteprofil 7 vorgesehen, dessen Breite jedoch etwas größer als die des Steges 4 bemessen ist. Dadurch, dass der Steg 4 die gleiche Kontur wie das Halteprofil aufweist, gewinnt er gegenüber einem geradlinigen Steg mit einem Breitenmaß, das etwas geringer als das der Ausnehmung 8 ist, an Stabilität. Dadurch, dass der Steg etwas schmaler als das Halteprofil ist und dadurch, dass das Bodenteil 3 Öffnungen 6 aufweist, ist die Befestigungsschiene 1 in einem Arbeitsgang mit einem Formwerkzeug und einstückig herstellbar.

Dank des offenen Endes 12 des Halteprofils 7 sowie dank der Öffnungen 6 im Bodenteil 2 ist die Befestigungsschiene leicht reinigbar.

In dem Steg 4 sind an den mit den Erweiterungen 9 korrespondierenden, kreisrunden Abschnitten mittig Befestigungsöffnungen 15 vorgesehen, mit denen die Befestigungsschiene auf einem Untergrund mit Hilfe von Schrauben, Bolzen oder Nieten fixiert wird.

In dem Wandteil sind keine Passagen zur Durchführung eines Gurtes oder Seiles eingebracht, was aber hier auch prinzipiell möglich ist. Da sie aber in dieser Ausführung nicht vorgesehen sind, weist auch der Steg keine Anhebung 14 gegenüber der Unterseite des umlaufenden Randes auf. Werden die Passagen dennoch und ohne gleichzeitiges Anheben des Steges in das Wandteil eingebracht, so ist die Befestigungsschiene entweder zur Befestigung eines dreipilzigen Gurtankers oder zur Befestigung oder Umlenkung eines Gurtes, oder zur Befestigung eines ein- oder zweipilzigen Gurtankers zusammen mit einem Gurt einsetzbar, indem der Gurt durch die Passagen an dem eingesetzten Gurtanker vorbei geführt wird.

Denkbar, aber hier nicht dargestellt, ist auch eine Ausführungsform, die ein Halteprofil mit zwei offenen Enden aufweist, welche mit einer Erweiterung und/oder mit einer unerweiterten Ausnehmung ausgestattet sind. Weist das offene Ende eine Erweiterung auf, so ist der Gurtanker zusätzlich in Längsrichtung der Ausnehmung in die Befestigungsschiene einsetzbar.

Ein weiteres Ausführungsbeispiel der Erfindung, eine Kurzbefestigungsschiene 1, welche in den Figuren 9 bis 12 dargestellt ist, ist mit einem kreisförmigen Grundriss ausgestattet. Das kalottenförmige Wandteil 2 der Befestigungsschiene ist nach oben hin zu einem Klauenpaar 10 ausgebildet und bildet mit seinem unteren Teil den umlaufenden Rand 5, der, da der Steg 4 hier nicht mit einer Anhebung 14 gegenüber dem umlaufenden Rand 5 verläuft, an den Stegenden in den Steg 4 übergeht. Der Steg 4 verläuft über den Kreisdurchmesser und im wesentlichen parallel zum Halteprofil 7, das mit jeweils einer Erweiterung 9 zu zwei offenen Enden 12 ausgebildet ist.

Durch das Auslaufen der Halteprofilenden zu zwei zu den Enden offenen Erweiterungen 9 ist ein hier nicht dargestellter einpilziger Gurtanker von beiden Seiten des Halteprofils 7 in Richtung der Längsachse des Halteprofils 7 einsetzbar und mit seinem pilzartigem Fuß unter das Klauenpaar 10 schiebbar, wobei der Steg 4 die Tiefenbegrenzung für den Gurtanker bildet. Wie in den Figuren 9 und 11 ersichtlich, weist das Klauenpaar 10, das aus dem kalottenförmigen Wandteil 2 hervorgeht, eine Abflachung 16 auf, die dem Gurtanker eine sichere Fixierung als auf einem kalottenförmigen Untergrund erlaubt.

Da das Halteprofil 7 breiter als der Steg 4 ausgebildet ist und das Bodenteil 3 beidseitig zum Steg 4 Öffnungen 6 aufweist, ist auch dieses Ausführungsbeispiel einstückig als Gussteil in nur einem Arbeitsgang mit einem Formwerkzeug herstellbar.

Da beide Enden des Halteprofils 7 geöffnet sind, ist auch ein besonders leichtes Reinigen der Befestigungsschiene möglich.

In den Steg 4 sind zwei Befestigungsöffnungen 15 zur Befestigung der Befestigungsschiene auf einen Untergrund vorgesehen.

Denkbar, aber hier nicht dargestellt, ist auch eine Ausführungsform, die ein Halteprofil mit einem offenen Ende und einem mit einer Begrenzung versehenen Ende aufweist, so dass ein einpilziger Gurtanker nur von dem einen offenen Ende her auf die Befestigungsschiene aufschiebbar ist.

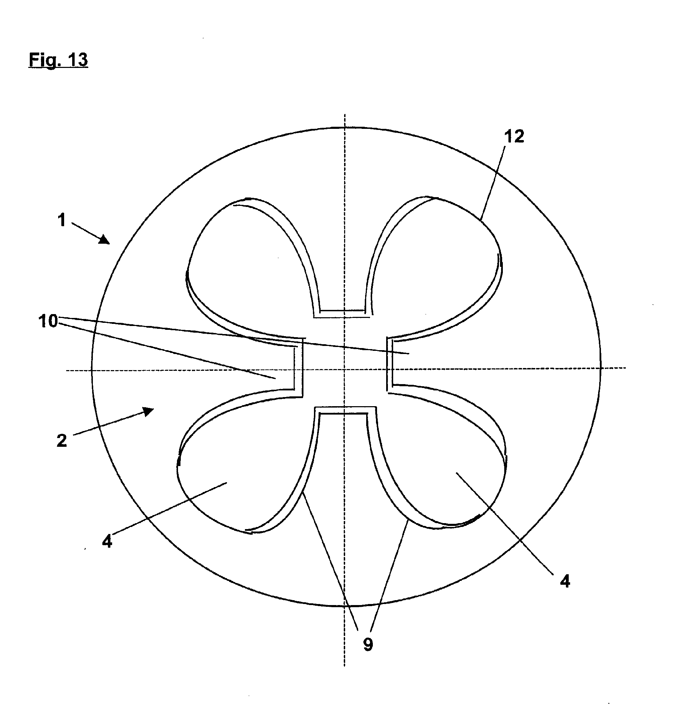

In Fig. 13 wird eine weitere Ausführungsform der Erfindung gezeigt, die, ähnlich wie die vorhergehende Ausführungsform einen kreisförmigen Grundriss aufweist, welches aber ein Befestigungsprofil 7 mit zwei zueinander senkrecht stehenden Ausnehmungen 8 aufweist. Diese Ausnehmungen 8 enden mit jeweils einer Erweiterung 9, wobei sich, in der Mitte auf einem Innenkreis liegend, zwei senkrecht zueinander stehende Klauenpaare 10 bilden. Durch diese Ausgestaltung des Halteprofils 7 ist ein hier nicht dargestellter einpilziger Gurtanker in Richtung der jeweilig gewählten Ausnehmung von zwei Seiten her einsetzbar und mit dem Fuß unter das jeweilige Klauenpaar 10 schiebbar, so dass der Gurtanker insgesamt von vier Richtungen her auf der Befestigungsschiene 1 befestigbar ist.

Die Klauenpaare, die aus dem kalottenförmigen Wandteil hervorgehen, sind mit einer, hier nicht dargestellten Abflachung 16 versehen, die dem befestigten Gurtanker einen sicheren Sitz bietet.

Der Steg 4, der hier als Kreuz mit den Erweiterungen 9 entsprechend erweiterten Enden ausgeführt ist, bleibt mit seiner Breite kleiner als das parallel dazu verlaufende, ebenfalls kreuzförmige Halteprofil, so dass auch hier die Herstellung einer einstückigen Befestigungsschiene mit einem Formwerkzeug, in einem Gussvorgang und mit einfacher Formtrennung möglich ist.

Dank der offenen Enden 12 des Halteprofils 7 ist ein sehr leichtes Reinigen der Befestigungsschiene möglich.

Wie in der vorangegangenen Ausführungsform, so sind auch hier an den Stegenden Befestigungsöffnungen 15 vorgesehen, die aber der Übersicht halber hier nicht dargestellt sind.

Denkbar, aber hier nicht dargestellt, ist auch eine Ausführungsform, die ein Halteprofil aufweist, das mit einer und/oder mit zwei senkrecht zueinander stehenden Ausnehmungen vorgesehen ist, die mit einem offenen Ende und einem mit einer Begrenzung versehenen Ende ausgestattet sind, so dass ein einpilziger Gurtanker jeweils nur von dem einen offenen Ende her auf die Befestigungsschiene aufschiebbar ist.

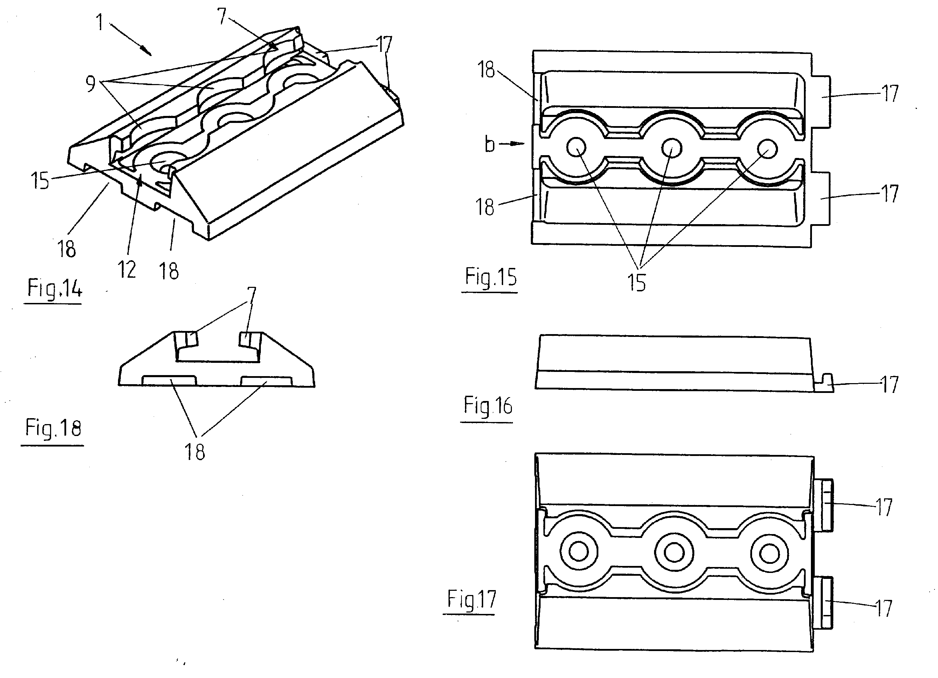

In den Figuren 14 bis 18 ist eine Befestigungsschiene 1 mit einem Halteprofil 7 mit drei Erweiterungen 9 und zwei offenen Enden 12 dargestellt. Zusätzlich weist die Befestigungsschiene 1 stirnseitig Ankopplungselemente auf. Diese ragen an der einen Stirnseite der Befestigungsschiene 1 als zwei horizontal verlaufende, hakenförmige Vorsprünge 17 aus dem Bodenteil heraus und bilden an der anderen Stirnseite der Befestigungsschiene zu den Vorsprüngen 17 korrespondierende Verbindungsöffnungen 18. Zur Ankopplung einer weiteren, mit gleichen korrespondierenden Ankopplungselementen versehenen und hier nicht dargestellten Befestigungsschiene sind die hakenförmigen Vorsprünge der Befestigungsschiene in die Verbindungsöffnungen 18 der dargestellten Befestigungsschiene 1 einführbar, wobei die hakenförmigen Vorsprünge mit ihren Hinterschneidungen die Wandung der dargestellten Befestigungsschiene 1 umgreifen, so dass eine lose Verbindung zwischen den beiden Befestigungsschienen herstellbar ist. Durch eine Fixierung beider Befestigungsschienen auf einem Untergrund beispielsweise durch Verschraubung der Befestigungsschienen mit durch die Befestigungsöffnungen 15 geführten Schrauben (nicht dargestellt) mit dem Untergrund, ist eine kraft- und formschlüssige Verbindung zwischen den beiden Befestigungsschienen möglich. Entsprechend umgekehrt sind zur Ankopplung die hakenförmigen Vorsprünge 17 der dargestellten Befestigungsschiene 1 in die Verbindungsöffnungen einer nicht dargestellten Befestigungsschiene einführ- und ankoppelbar. Hierdurch sind zwei oder mehrere Befestigungsschienen aneinander ankoppelbar.

Die Lage der Ankopplungselemente ist hier beispielhaft stirnseitig, wobei die Ankopplungselemente, wie hier nicht dargestellt, auch an anderen Stellen, beispielsweise längsseitig und/oder stirnseitig, angesiedelt sein können. Hierdurch sind Befestigungsschienen von verschiedenen Seiten aneinander ankoppelbar, so dass die Befestigungsschienen, abhängig von ihren Geometrien, beispielsweise mit einem rechteckigem oder einem sechseckigen Grundriss, in Sternform oder in rechtwinkliger oder sechseckiger Wabenstruktur anordbar sind. Zudem sind runde oder ovale Grundrisse denkbar, die bei der anzukoppelnden Befestigungsschiene zumindest am Ankopplungsort einen Grundriss erfordern, der eine zum Rund oder Oval äquivalente Negativform aufweist.

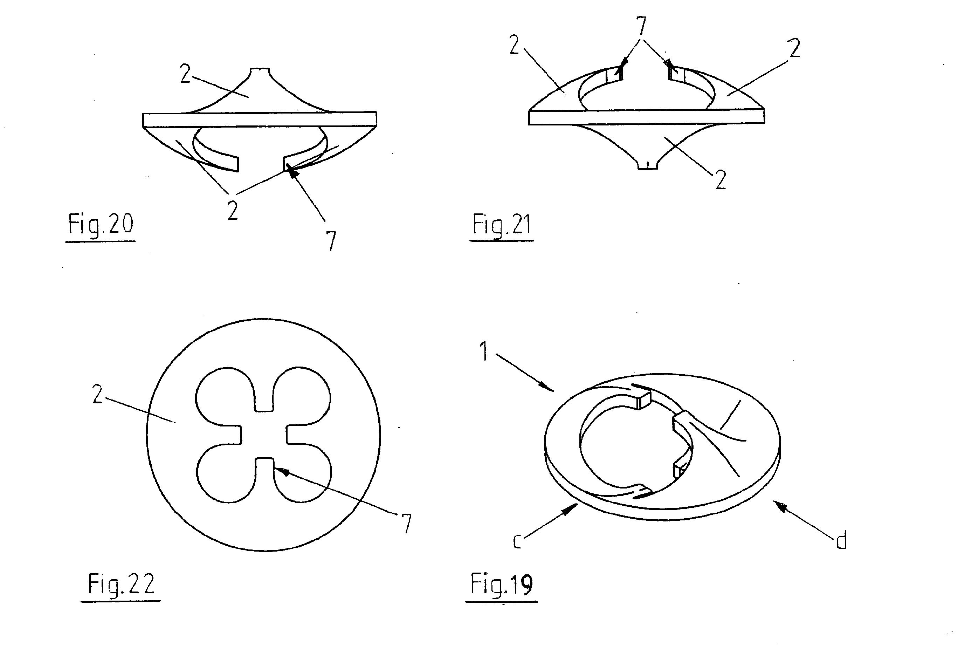

In den Figuren 19 bis 22 ist ähnlich wie in den Figuren 9 bis 12 eine Befestigungsschiene 1 für einpilzige Gurtanker dargestellt. Der Steg 4 der Befestigungsschiene 1 weist jedoch hier in seiner Mitte eine Unterbrechung auf, die die Öffnungen 6 im Bodenteil miteinander verbindet. Die beiden Teilstücke des Steges 4 erstrecken sich jeweils vom umlaufenden Rand 5 zur Mitte hin in Form von Vorsprüngen, wölben sich gleichzeitig nach unten hin bogenförmig und bilden zu dem im Wandteil 2 angeordneten Klauenpaar 10 ein zusätzliches Klauenpaar 10, das gleich dem Klauenpaar 10 in dem Wandteil 2 ausgeformt ist und mit den Öffnungen 6 ein weiteres Halteprofil 7 bildet. Die Halteprofile 7 sind somit ober- und unterseitig der Befestigungsschiene angeordnet und verlaufen in ihren Längsachsen senkrecht zueinander. In die Halteprofile 7 sind jeweils von beiden Enden der Halteprofile 7 her einpilzige Gurtanker einführbar, wobei diese mit ihren Kopfoberseiten gegeneinander führbar sind, dabei aneinander stoßen und sich somit gegenseitig gegen die Unterseite ihres ihnen zugeordneten Halteprofils drücken. Eine Befestigungsschiene dieser Art ist somit beispielsweise als Verbindungsstück zwischen zwei Gurten mit einpilzigen Gurtankern an ihren zu verbindenden Enden einsetzbar.

Hier nicht weiter dargestellt, aber im Rahmen der Erfindung denkbar, sind ober- und unterseitige Halteprofile für mehrpilzige Gurtanker ausgebildet, wobei eine ungerade Anzahl von pilzartigen Füßen besonders bevorzugt ist.

Ferner ist denkbar, dass im Rahmen der Erfindung die Halteprofile auch für die Verbindung von Gurtankern mit einer unterschiedlichen Anzahl von pilzartigen Füßen ausgelegt sind.

Bevorzugte Werkstoffe der beschriebenen Ausführungsformen sind Aluminium-, Stahl- oder Eisenwerkstoffe sowie Kunststoffe, wobei als Kunststoff faserverstärkter hochfester Kunststoff besonders bevorzugt ist.

### Befestigungsschiene

### Bezugszeichenliste

- 1: Befestigungsschiene
- 2: Wandteil
- 3: Bodenteil
- 4: Steg
- 5: Umlaufender Rand
- 6: Öffnung
- 7: Halteprofil
- 8: Ausnehmung
- 9: Erweiterung
- 10: Klauenpaar
- 11: Begrenzung
- 12: Offenes Ende
- 13: Passage
- 14: Anhebung
- 15: Befestigungsöffnung
- 16: Abflachung
- 17: Vorsprung
- 18: Verbindungsöffnung

## Patentansprüche

1. Befestigungsschiene (1) zur Befestigung von Gurtankern mit einem Bodenteil (3) und einem Wandteil (2), wobei das Wandteil (2) zur Aufnahme des Gurtankers in seinem oberen Bereich durch eine Ausnehmung (8) mit mindestens einer Erweiterung (9) zu einem Halteprofil (7) ausgebildet ist, **dadurch gekennzeichnet, dass** das Bodenteil (3) einen Steg (4) in Längsrichtung des Halteprofils (7), Öffnungen (6) an beiden Seiten des Steges (4) und einen umlaufenden Rand (5) aufweist, wobei der umlaufende Rand (5) im wesentlichen durch den unteren Rand des Wandteiles (2) oder durch den unteren Rand des Wandteiles (2) und den Stegenden gebildet wird, und dass die Ausnehmung (8) im oberen Bereich des Wandteiles (2) breiter als der Steg (4) ist.

2. Befestigungsschiene (1) nach Anspruch 1, **dadurch gekennzeichnet, dass** das Halteprofil (7) mindestens zwei miteinander verbundene Erweiterungen (9) mit einem Übergang aufweist, wobei der Übergang zu einem Klauenpaar (10) ausgebildet ist.

3. Befestigungsschiene (1) nach Anspruch 1 oder 2, **dadurch gekennzeichnet, dass** das Halteprofil (7) an einem seiner Enden oder an seinen beiden Enden eine Begrenzung (11) aufweist.

4. Befestigungsschiene (1) nach einem der Ansprüche 1 bis 3 , **dadurch gekennzeichnet, dass** das Wandteil (2) in Richtung des Steges (4) seitliche Passagen (13) zur Durchführung eines Gurtes aufweist.

5. Befestigungsschiene (1) nach Anspruch 4, **dadurch gekennzeichnet, dass** zur Durchführung des Gurtes die Stegunterseite mehr als eine Gurtdicke höher als der untere Rand des Wandteiles (2) angeordnet ist.

6. Befestigungsschiene (1) nach einem der Ansprüche 1 bis 5, **dadurch gekennzeichnet, dass** der Steg (4) und/oder das Wandteil (2) Befestigungsöffnungen (15) zur Befestigung der Befestigungsschiene (1) an einer Unterlage mit Schrauben, Bolzen oder Nieten aufweisen.

7. Befestigungsschiene (1) nach einem der Ansprüche 1 bis 6, **dadurch gekennzeichnet, dass** sie einstückig ausgebildet ist.

8. Befestigungsschiene (1) nach einem der Ansprüche 1 bis 7, **dadurch gekennzeichnet, dass** das Wandoberteil mindestens zwei sich kreuzende Ausnehmungen (8) zur Aufnahme von Gurtankern aufweist.

9. Befestigungsschiene (1) nach einem der Ansprüche 1 bis 8, **dadurch gekennzeichnet, dass** sie an eine andere Befestigungsschiene ankoppelbar ist.

10. Befestigungsschiene (1) nach einem der Ansprüche 1 bis 9, **dadurch gekennzeichnet, dass** sie zwei Halteprofile (7) aufweist.

11. Befestigungsschiene (1) nach einem der Ansprüche 1 bis 10, **dadurch gekennzeichnet, dass** der Steg (4) mindestens eine Unterbrechung aufweist, wodurch der Steg in mindestens zwei Teile geteilt ist.

12. Befestigungsschiene (1) nach Anspruch 11, **dadurch gekennzeichnet, dass** der Steg (4) zu einem Halteprofil (7) mit einem Klauenpaar (10) und zwei Erweiterungen (9) ausgebildet ist.

13. Befestigungsschiene (1) nach einem der Ansprüche 1 bis 12, **dadurch gekennzeichnet, dass** sie aus Eisen-, Stahl-, Aluminium- und/oder hochfesten Kunststoff-Werkstoffen gefertigt ist.
